# EUROPEAN PATENT APPLICATION

(11) **EP 3 163 891 A1**
(43) Date of publication of application: **03.05.2017**
(21) Application number: 15811430.6
(22) Date of filing: 27.04.2015
(51) Int. Cl.: H04N 21/436, H04N 21/472

(54) **INFORMATION PROCESSING APPARATUS, INFORMATION PROCESSING METHOD, AND PROGRAM**

(30) Priority: 24.06.2014 JP 2014129194
(71) Applicant: Sony Corporation, Tokyo 108-0075 (JP)
(72) Inventor: ONO, Junya, Tokyo 108-0075 (JP)
(74) Representative: MFG Patentanwälte Meyer-Wildhagen Meggle-Freund Gerhard PartG mbB
(86) International application number: PCT/JP2015/062725
(87) International publication number: WO 2015/198716

(57) **Abstract**

[Object] To allow a user to enjoy content more comfortably by reflecting preference or action of the user in a mood to be created in coordination with presentation of information of the content to be utilized by the user.

[Solution] Provided is an information processing apparatus including: a control unit configured to control mood creating equipment so as to create, in coordination with presentation of information of content to be utilized by a user, a mood which is different from the presentation of the information and which is a mood from stimulation perceivable by the user, the mood being a mood in which preference or action of the user is reflected.

## Description

### Technical Field

The present disclosure relates to an information processing apparatus, an information processing method, and a program.

### Background Art

In related art, an apparatus creating a mood to be felt by a user is known. For example, Patent Literature 1 discloses a system of automatically creating a mood such as a lighting mood based on input of a keyword such as a keyword typed by a user or spoken by a user. This Patent Literature 1 discloses an example of color, sound and an image as the mood. Further, Patent Literature 2 discloses a technology in which a light source configured to create a plurality of colors is provided next to at least one side of sides surrounding a main screen of a TV set, and each of the plurality of colors is made to adapt to video content in a spatially corresponding region of the screen.

### Citation List

### Patent Literature

Patent Literature 1: JP 2010-525538A
Patent Literature 2: JP 2010-515931A

### Summary of Invention

### Technical Problem

The technology disclosed in Patent Literature 1 is the one in which a mood is created, not based on content, but based on a keyword designated by a user, and is not the one in which a mood is automatically created according to presentation of information of the content while the content is utilized. Therefore, the technology disclosed in Patent Literature 1 is not the one in which the user can experience realistic sensation coordinated with the content. Further, with the technology disclosed in Patent Literature 2, preference or action of the user is not reflected in the color created so as to adapt to the video content. If, when color is created, output of the created color is adjusted while preference or action of the user is reflected, it is considered that the user can feel a mood coordinated with the content more comfortably.

Therefore, the present disclosure proposes new and improved information processing apparatus, information processing method or program which allows the user to enjoy content more comfortably by reflecting preference or action of the user in a mood to be created in coordination with presentation of information of the content to be utilized by the user.

### Solution to Problem

According to the present disclosure, there is provided an information processing apparatus including: a control unit configured to control mood creating equipment so as to create, in coordination with presentation of information of content to be utilized by a user, a mood which is different from the presentation of the information and which is a mood from stimulation perceivable by the user, the mood being a mood in which preference or action of the user is reflected.

According to the present disclosure, there is provided an information processing method including: controlling mood creating equipment using a control apparatus so as to create, in coordination with presentation of information of content to be utilized by a user, a mood which is different from the presentation of the information and which is a mood from stimulation perceivable by the user, the mood being a mood in which preference or action of the user is reflected.

According to the present disclosure, there is provided a program causing a computer to execute a function of controlling mood creating equipment so as to create, in coordination with presentation of information of content to be utilized by a user, a mood which is different from the presentation of the information and which is a mood from stimulation perceivable by the user, the mood being a mood in which preference or action of the user is reflected.

### Advantageous Effects of Invention

As described above, according to the present disclosure, it is possible to allow a user to enjoy content more comfortably by reflecting preference or action of the user in a mood to be created in coordination with presentation of information of the content to be utilized by the user.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrating an example of a hardware configuration of a mood creating system according to a first embodiment.
[FIG. 2] FIG. 2 is an explanatory diagram illustrating an example of mood creating equipment.
[FIG. 3] FIG. 3 is a diagram illustrating an example of a software configuration of an information processing apparatus according to the embodiment.
[FIG. 4] FIG. 4 is an explanatory diagram illustrating an example of a color database.
[FIG. 5] FIG. 5 is an explanatory diagram illustrating an example of an aroma database.
[FIG. 6] FIG. 6 is an explanatory diagram illustrating an example of a user database.
[FIG. 7] FIG. 7 is an explanatory diagram illustrating an example of a device profile.
[FIG. 8] FIG. 8 is a flowchart illustrating mood control processing according to the embodiment.
[FIG. 9] FIG. 9 is a diagram illustrating details of flow of the mood control processing according to the embodiment.
[FIG. 10] FIG. 10 is an explanatory diagram illustrating an example of a mood table.
[FIG. 11] FIG. 11 is an explanatory diagram illustrating an example of a personalized mood table.
[FIG. 12] FIG. 12 is an explanatory diagram illustrating an example of a personalized time-series graph.
[FIG. 13] FIG. 13 is an explanatory diagram illustrating an example of an excitement applied time-series graph.
[FIG. 14] FIG. 14 is an explanatory diagram illustrating an example of correction of an output timing according to perception recognition characteristics.
[FIG. 15] FIG. 15 is an explanatory diagram illustrating a usage example of a mood creating system according to the embodiment.
[FIG. 16] FIG. 16 is an explanatory diagram illustrating a combined example of the time-series graph.
[FIG. 17] FIG. 17 is an explanatory diagram illustrating an example of a selection rule.
[FIG. 18] FIG. 18 is an explanatory diagram illustrating a usage example of a mood creating system according to a second embodiment.
[FIG. 19] FIG. 19 is an explanatory diagram illustrating another example of the selection rule.
[FIG. 20] FIG. 20 is a diagram illustrating an example of a software configuration of an information processing apparatus according to a third embodiment.
[FIG. 21] FIG. 21 is an explanatory diagram illustrating an example of mood adjusting processing using sound operation.
[FIG. 22] FIG. 22 is an explanatory diagram illustrating an example of mood adjusting processing using motion of a finger and a line of sight.
[FIG. 23] FIG. 23 is an explanatory diagram illustrating an example of mood adjusting processing using the number of fingers and motion of the fingers.
[FIG. 24] FIG. 24 is an explanatory diagram illustrating an example of mood adjusting processing using a type and motion of the finger.
[FIG. 25] FIG. 25 is an explanatory diagram illustrating an example of mood control processing by a mood creating system according to a fourth embodiment.
[FIG. 26] FIG. 26 is an explanatory diagram illustrating an example of the mood control processing according to the embodiment.
[FIG. 27] FIG. 27 is a diagram illustrating an example of multi mood output adaptive equipment according to a fifth embodiment.

### Description of Embodiments

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that description will be provided in the following order.
1. First embodiment (reflection of user preference)
   1.1. Outline of mood creating system
   1.2. Hardware configuration
   1.3. Software configuration
      1.3.1. Content analyzing unit
      1.3.2. Mood managing unit
      1.3.3. Knowledge base system unit
      1.3.4. Device managing unit
      1.3.5. Output control unit
   1.4. Mood control processing
      1.4.1. Content extracting processing
      1.4.2. Feature value extracting processing
      1.4.3. Mood table generating processing
      1.4.4. Time-series graph generating processing
      1.4.5. Device optimizing processing
   1.5. Usage example
      1.5.1. Example upon viewing moving image
      1.5.2. Example upon listening to music
      1.5.3. Example upon watching movie
2. Second embodiment (processing of combining a plurality of moods)
3. Third embodiment (reflecting user action)
   3.1. Outline of mood creating system
   3.2. Configuration example of mood creating system
   3.3. Mood adjusting processing
      3.3.1. Mood adjustment using direct operation
      3.3.2. Mood adjustment using sound operation
      3.3.3. Mood adjustment using gesture operation
      3.3.4. Mood adjusting processing according to other action
4. Fourth embodiment (creating mood while recognizing surrounding environment)
5. Fifth embodiment (multi mood output adaptive equipment)

### <<1. First embodiment>>

### <1.1. Outline of mood creating system>

First, outline of a mood creating system according to a first embodiment of the present disclosure will be described. The mood creating system is a system which creates a mood in space where a user is located in coordination with presentation of information of content to be utilized by the user. In the mood created by the mood creating system according to the present embodiment, user preference is reflected.

Examples of content include various kinds of information which can be utilized by the user, including a movie, a moving image, music, an image, electronic program guide (EPG) data, social network service (SNS), schedule data, or the like. That is, the content includes viewing information, watching information, listening information, or the like, to be presented to the user.

The mood creating system according to the first embodiment generates mood information to be created in space by analyzing a feature value from these pieces of content and checking the feature value against a knowledge database. In the mood information generated here, user preference is reflected. The mood creating system according to the present embodiment creates a mood of space using optimal mood creating equipment according to the generated mood information. Further, the mood creating system can also create a mood at an appropriate timing. Therefore, the user who is utilizing the content can experience realistic sensation along presentation of information of the content.

The information of the content includes elements from which the feature value can be extracted. For example, in the case of a movie, the information includes sound, caption or the like, in the case of music, the information includes lyrics, or the like, in the case of an image, the information can be converted into a keyword, or the like, and, in the case of a moving image, the information includes sound, or the like. Further, in the case of electronic program guide (EPG) data, the information includes text of the outline, or the like, in the case of social network service (SNS), the information includes comment, or the like, and, in the case of schedule, the information includes text of a ToDo list, or the like. The mood creating system generates mood information and generates a mood in space based on these elements included in the content.

The mood can be one which can be regarded and expressed as the whole of light, sound, smell, a sign, or the like, which surround a specific location or event, an object or a person and which can be perceived by a person. In the mood creating system according to the present embodiment, a mood which provides stimulation to a visual sense, an auditory sense, an olfactory sense and a tactile sense among senses which can be perceived by a person, and which is coordinated with presentation of information of content, is created. The created "mood" does not include presentation of information of the content itself. As the mood creating equipment, it is possible to utilize home electronics such as lighting equipment, a speaker, an electric fan, an aroma diffuser and an air conditioner.

### <1.2. Hardware configuration>

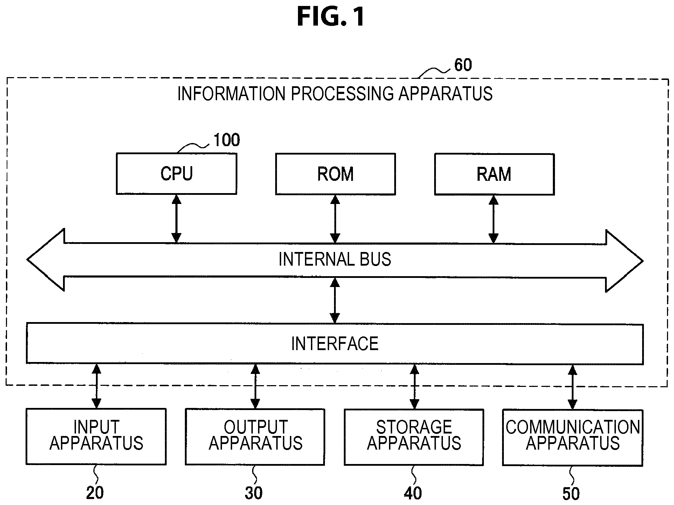

A configuration example of the mood creating system 10 according to the present embodiment will be described next. FIG. 1 is an explanatory diagram schematically illustrating a hardware configuration of the mood creating system 10. The mood creating system 10 includes an input apparatus 20, mood creating equipment 30, an information processing apparatus 60, a storage apparatus 40 and a communication apparatus 50.

The input apparatus 20 includes reproducing equipment for reproducing or displaying content of a video recorder, a personal computer, a smartphone, a music player, or the like. Information of content to be reproduced or displayed is input to the information processing apparatus 60. Further, the input apparatus 20 includes an imaging apparatus and a sensor apparatus. Information detected by the imaging apparatus and the sensor apparatus is input to the information processing apparatus 60 and used for output control of the mood creating equipment 30. Examples of the imaging apparatus include a monitoring camera, a color recognition camera, or the like. Further, examples of the sensor apparatus include an illuminance sensor, a temperature sensor, a humidity sensor, a position detecting module such as a radio frequency identifier (RFID), or the like.

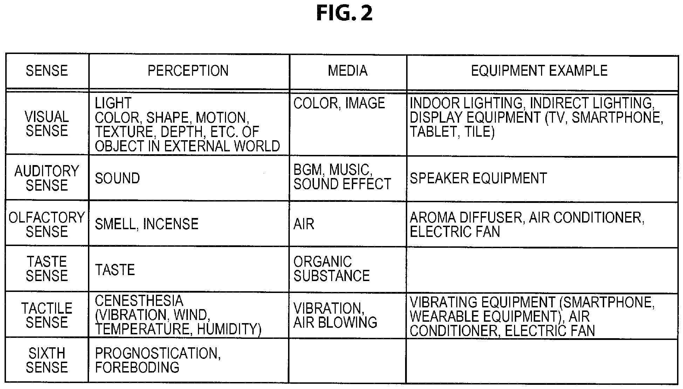

The mood creating equipment 30 is equipment used for creating a mood in space. Output control of the mood creating equipment 30 is performed by the information processing apparatus 60. The mood creating equipment 30 can use, for example, equipment which can make a change to a visual sense, an auditory sense, an olfactory sense and a tactile sense. FIG. 2 illustrates an example of an output apparatus (mood creating equipment) which can make a change to senses of a human, and, among these senses, a visual sense, an auditory sense, an olfactory sense and a tactile sense. As equipment which can make a change to an angle of sight, it is possible to use equipment which affects light viewed by the user through media of color and an image. For example, examples of the equipment which can make a change to the visual sense include lighting equipment, indirect lighting, and display equipment such as a TV, a smartphone and a tablet computer. Further, the equipment which can make a change to an auditory sense can use equipment which affects sound recognized by the user through media of a BGM, music and sound effect. Examples of the equipment which can make a change to the auditory sense include speaker equipment.

Further, the equipment which can make a change to an olfactory sense can use equipment which affects smell and incense recognized by the user through a medium of air. Examples of the equipment which can make a change to the olfactory sense include an aroma diffuser, an air conditioner and an electric fan. Further, the equipment which can make a change to a tactile sense can use equipment which affects cenesthesia of the user through media of vibration and air blowing. Examples of the equipment which can make a change to the tactile sense include a smartphone or wearable equipment which can generate vibration, and an air conditioner or an electric fan which can blow air or adjust a temperature and humidity. Among these, because a speaker, a display, lighting equipment, an aroma diffuser, an electric fan, an air conditioner, or the like, are all home electronics, it is possible to create a mood by making these home electronics coordinate with each other without using special equipment. However, these equipment is merely an example, and equipment other than these can be used.

The information processing apparatus 60 includes a CPU, a storage element such as a RAM and a ROM, a storage apparatus 40 in which various kinds of data are stored, and a communication apparatus 50 for performing communication with external equipment, or the like. Among these, in the ROM, a control program to be executed by the CPU is stored. Further, in the RAM, an operation result of the CPU and various kinds of information input from the input apparatus 20 are written. The CPU functions as a control unit 100 in the present disclosure.

In the storage apparatus 40, data of a knowledge database, a user database, a device profile, or the like, is stored. The knowledge database is a database in which various feature values extracted from content and mood information are mapped. The user database is a database in which user preference information is stored. Further, the communication apparatus 50 is configured as, for example, an apparatus for performing communication with an external communication network such as the Internet.

### <1.3. Software configuration>

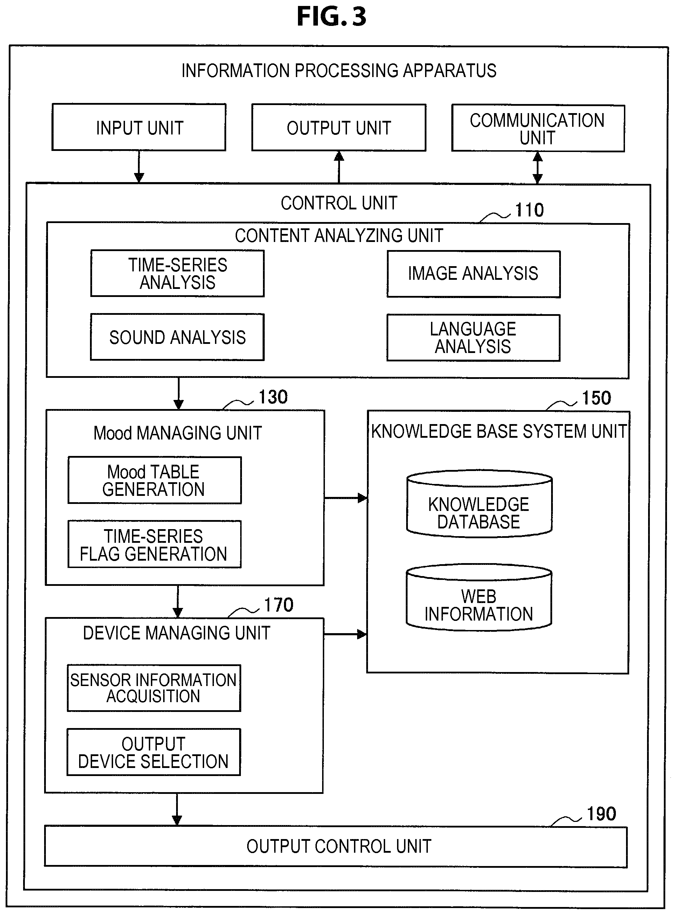

FIG. 3 is a block diagram functionally illustrating a software configuration of the control unit 100 of the information processing apparatus 60. This control unit 100 includes a content analyzing unit 110, a mood managing unit 130, a knowledge base system unit 150, a device managing unit 170 and an output control unit 190. These units can be specifically made functional units which are implemented by the CPU executing a program.

### [1.3.1. Content analyzing unit]

The content analyzing unit 110 executes processing of extracting a feature value of content by analyzing content of information of the content. In the present embodiment, the content analyzing unit 110 is configured to be able to execute each analyzing processing of time-series analysis, image analysis, sound analysis and language analysis. Processing of the time-series analysis is performed within a timeline of the content. In the image analysis, processing of performing object recognition in an image within the information of the content and extracting a feature value relating to the image is performed. In the sound analysis, processing of substituting text for sound through sound recognition is performed. Further, in the sound analysis, processing of extracting a feature value such as excitement and genre of sound itself, a volume, tempo and sound quality is performed. In the language analysis, processing of performing morphological analysis, syntax analysis, or the like, and extracting a keyword, or the like, as a feature value is performed.

Specifically, the content analyzing unit 110 separates a timeline, an image, sound and a text within the content and extracts a feature value for each separated data. For example, concerning the image, the content analyzing unit 110 converts a feature value relating to the image into a keyword and extracts the keyword. Further, concerning the sound, the content analyzing unit 110 can convert the sound into a text through sound analysis, and, then, convert the feature value into a keyword through language analysis and extract the keyword. Note that the content analyzing unit 110 may execute analyzing processing other than the above-described analyzing processing.

### [1.3.2. Mood managing unit]

The mood managing unit 130 makes an inquiry to the knowledge base system unit 150 about the feature value of content extracted by the content analyzing unit 110 and generates mood information to be created using the mood creating equipment 30 based on the returned result. Specifically, the mood managing unit 130 acquires a mood parameter (such as color and a temperature) by making an inquiry to the knowledge base system unit 150 using the feature value at a time point on the timeline as a key. Then, the mood managing unit 130 generates a mood table by embedding the acquired mood parameter in each slot of the mood table prepared in advance.

Further, the mood managing unit 130 generates a personalized mood table in which the user preference information returned from the knowledge base system unit 150 at the same time as the mood parameter is reflected when generating the mood table. When the output mood parameter matches user preference, output of the mood parameter is emphasized. Meanwhile, when the output mood parameter is against the user preference, it is also possible to weaken output of the mood parameter or prevent the mood parameter from being output. Alternatively, when there are a plurality of candidates for the mood parameter, it is also possible to prevent a mood parameter which is against the user preference from being selected.

Further, the mood managing unit 130 generates a time-series graph of the mood by linking the mood tables generated within the timeline in chronological order. Specifically, the mood managing unit 130 generates a time-series graph indicating change of the mood over time by linking the generated mood tables in chronological order. Further, the mood managing unit 130 may detect excitement for each timeline by detecting excitement of sound from the generated time-series graph and emphasize each mood parameter within the mood table. In the present embodiment, the time-series graph of the mood generated in this manner is transmitted to the device managing unit 170 as the mood information.

### [1.3.3. Knowledge base system unit]

The knowledge base system unit 150 acquires a mood parameter corresponding to the feature value of content for which an inquiry is made with reference to the knowledge database stored in the storage apparatus 40 and returns the mood parameter to the mood managing unit 130. Further, when the corresponding mood parameter cannot be obtained as a result of referring to the knowledge database, the knowledge base system unit 150 may access a search engine of the external Internet, or the like, through the communication apparatus 50 to acquire a relating mood parameter. At this time, at the same time, the knowledge base system unit 150 returns the user preference information to the mood managing unit 130 with reference to the user database stored in the storage apparatus 40. The knowledge base system unit 150 will be described below along with an example of databases referred to by the knowledge base system unit 150.

### (Knowledge database)

In the knowledge database used in the present embodiment, various kinds of data in which the feature values and the mood parameters are mapped are stored. Elements for creating a mood include, for example, a parameter such as color, incense (aroma), wind, a temperature, sound and vibration. In the present embodiment, parameter information such as these color and incense is defined as a core database, and a mood parameter corresponding to the feature value which becomes a key can be acquired with reference to the core database. The mood parameter of color and incense will be described below as an example of the core database.

First, concerning a color database, it is known that color has relations with feeling and a psychological state of a human. Image to be provided to a human is different according to types of color, and there are a wide variety of things one can associate with the color. Therefore, by utilizing a thing associated with the color, it is possible to express color felt from the keyword with respect to a specific keyword. In the mood creating system 10, by providing visual information of color to the user, a scene associated with the keyword is provided more intensely to the user as realistic sensation.

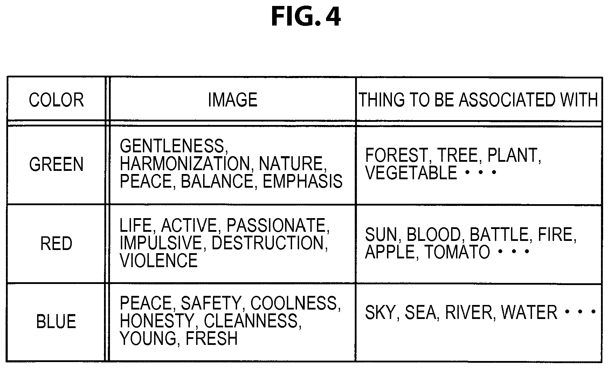

FIG. 4 illustrates an example of the color database. Typically, green is color associated with comfort, red is color associated with passion, and blue is color associated with intellectual sobriety. In the color database, image (symbol) expressed with each color and what is associated with the color are illustrated. In the knowledge database, various kinds of knowledge data in which keywords and color are mapped are stored based on this color database. For example, in the knowledge database, knowledge of combination of three items of "forest-color-green (forest is green)" is stored with respect to a feature value of "forest". Therefore, the knowledge base system unit 150 acquires a color parameter of "green" with respect to a keyword of "forest" with reference to the knowledge database.

Further, concerning the aroma database, incense (aroma) can change feeling, for example, calms or thrills a human. Image to be associated is different according to families of aroma. Therefore, by generating aroma corresponding to image matching semantic concept of a keyword, olfactory information of the user is stimulated, and a scene associated with the keyword is provided more intensely to the user as realistic sensation.

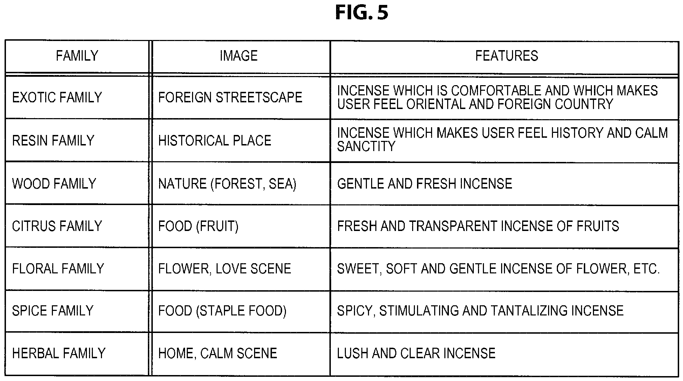

FIG. 5 illustrates an example of the aroma database. In this example, a family of aroma is divided into seven types, and image expressed by incense of each family and features of the incense are illustrated. In the knowledge database, various kinds of knowledge data in which keywords and incense are mapped are stored based on this aroma database. For example, in the knowledge database, knowledge of combination of three items of "nature-aroma-wood family (nature is incense of a wood family)" is stored. At this time, while there is no knowledge data itself relating to incense associated with a keyword of "forest", concept of "forest" is made broader concept based on ontology of "forest-broader-nature (semantic concept of forest is nature)". By this means, the knowledge base system unit 150 acquires an incense parameter of a "wood family" with respect to the keyword of "forest" with reference to the knowledge database. Semantic conceptualization (broader conceptualization) of a keyword may be repeated until the keyword matches any of knowledge data.

### (User database)

The user database used in the present embodiment is a database in which a user profile is stored, and user preference relating to color, incense, person, location, or the like, is stored. This user database is utilized for creating a mood in which user preference is reflected in space by emphasizing the mood parameter according to the user preference.

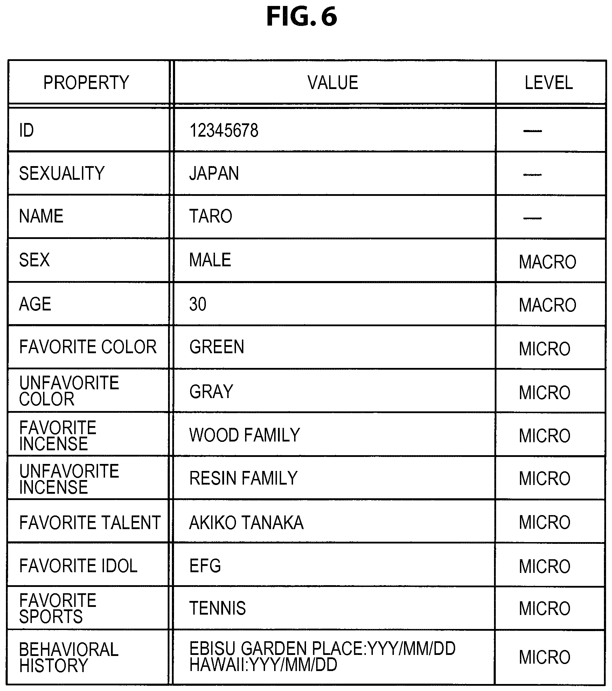

FIG. 6 illustrates an example of the user database. In the user database, property such as sex, nationality, age, interest, likes and dislikes and behavioral history of the user as an individual is stored. The property described here is merely an example, and appropriate property information can be used. In this user database, two modes of a macro level and a micro level are defined with respect to each property. It is possible to set a degree of reflection of user preference in an initial value of the generated mood parameter, that is, an analysis result in which the user preference is not reflected according to the mode of level.

For example, when it is desired to reflect user preference while a mood is reproduced truly to the initial value of the mood parameter, it is possible to select a macro level. Further, when it is desired to prioritize user preference over the initial value of the mood parameter, it is possible to select a micro level. The mode may be selectable by the user himself/herself or may be defined in advance by the information processing apparatus 60.

When the macro level and the micro level are defined in advance, for example, the levels can be defined as follows. The macro level can be defined as a group level in which the number of possible values (variations) of predetermined property for a profile of the user is equal to or less than a value defined in advance. For example, there is few variation for property of sex and age, and in the case of sex, there are two types of male and female, while in the case of age, there are ten types at most, and the number of types is equal to or less than the value defined in advance, so that the property is sorted as the group level. Meanwhile, the micro level can be defined as a level which is positioned as opposed to the group level and in which the number of possible values (variations) of predetermined property exceeds a value defined in advance. For example, there are enormous possible candidates for property of favorite talents, and the property is sorted as property which exceeds the value defined in advance.

The knowledge base system unit 150 returns current user preference information to the mood managing unit 130 along with the mood parameter with reference to the user database when there is an inquiry of the mood parameter from the mood managing unit 130. Note that the current user may be specified based on, for example, login data to the mood creating system 10 or based on login data to the input apparatus 20 or the mood creating equipment 30 for reproducing content.

### [1.3.4. Device managing unit]

The device managing unit 170 selects optimal mood creating equipment 30 which is to be subjected to output control based on the mood information generated at the mood managing unit 130 while managing the sensor information input from various sensor apparatuses configuring the input apparatus 20. For example, the device managing unit 170 recognizes a current mood based on the sensor information and selects optimal mood creating equipment 30 for creating a mood conforming with the mood information. Information of the selected mood creating equipment 30 is transmitted to the output control unit 190.

Further, the device managing unit 170 extracts a mood parameter which can be output with reference to the device profile of the user and transmits a command signal to the output control unit 190 which performs output control of the mood creating equipment 30. At this time, it is necessary to make output of the mood creating equipment 30 located around the user adapt to the output value according to the mood information to be created. Therefore, the device managing unit 170 selects mood creating equipment 30 which can perform output based on the mood information among mood creating equipment 30 located in space with reference to the device profile stored in the storage apparatus 40.

### (Device profile)

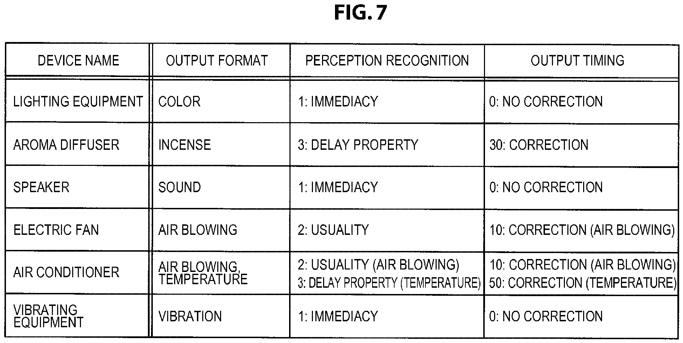

FIG. 7 illustrates an example of the device profile. The device profile includes, for example, name, an output format and information of perception recognition characteristics of the mood creating equipment 30. Further, the device profile is created for each user according to the mood creating equipment 30 located in space and is stored in the storage apparatus 40. The perception recognition characteristics are information indicating immediacy until when the user perceives change of the mood when the mood changes in accordance with output of the mood creating equipment 30. In the example of FIG. 7, the perception recognition characteristics are expressed with three-stage levels of "1. immediacy", "2. usuality" and "3. delay property". The lower level of the perception recognition characteristics indicates that the user can recognize change of the mood more immediately, and the higher level of the perception recognition characteristics indicates that the user is less likely to perceive change of the mood.

For example, because the user can perceive change of color of lighting equipment with a visual sense immediately when the color changes, the change is defined as level 1. Further, it takes a little time to perceive change of an air blowing volume of the electric fan from when wind blows, the change is defined as level 2. Still further, it takes a relatively long time for the user to perceive change of incense of the aroma diffuser with an olfactory sense, the change is defined as level 3. A difference in immediacy among these changes arises from time from when a perception element such as color, wind and incense is output from the mood creating equipment 30 until when the perception element reaches the user. The difference in time arises from whether a medium which transmits the perception element is light (color), a sound wave (sound), a wave having straightness (wind) or a wave having diffusivity (incense).

The device managing unit 170 determines an output timing from the mood creating equipment 30 with reference to the device profile so that the user perceives change of the mood in space at an optimal timing in coordination with content of information of the content.

### (1.3.5. Output control unit)

The output control unit 190 outputs a control signal to the mood creating equipment 30 according to a command of the device managing unit 170 so that a mood matching the mood information generated while the user preference is reflected is created.

<1.4. Mood control processing>

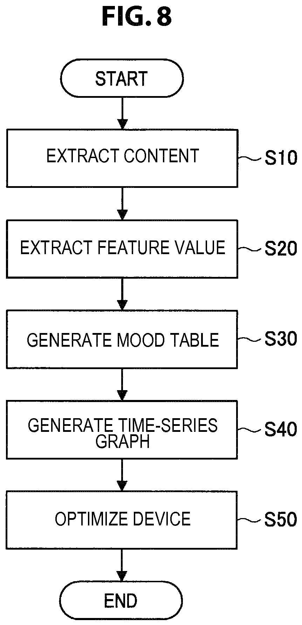

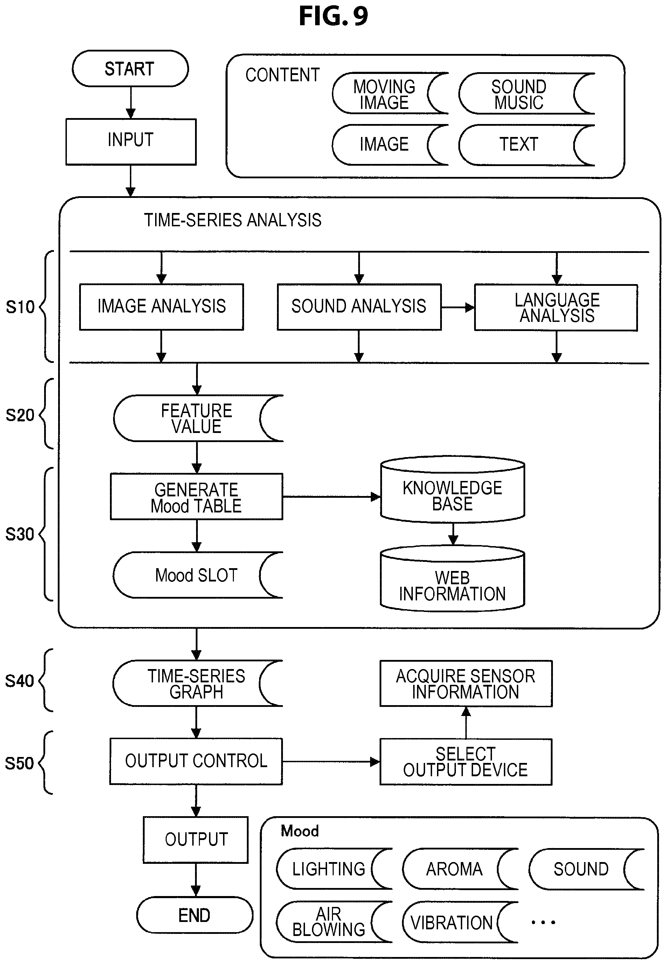

Mood control processing to be executed by the information processing apparatus 60 according to the present embodiment will be described next. FIG. 8 is a flowchart of the mood control processing. Further, FIG. 9 is a diagram illustrating details of flow of the mood control processing.

### [1.4.1. Content extracting processing]

First, in step S10, the content analyzing unit 110 separates a timeline, an image, sound and a text in content.

### [1.4.2. Feature value extracting processing]

Then, in step S20, the content analyzing unit 110 extracts a feature value for each separated data. For example, the content analyzing unit 110 converts the feature value of image data into a keyword. Further, the content analyzing unit 110 extracts a feature value through language analysis after converting sound data into a text through sound analysis. These analysis processing can be executed by utilizing known technologies.

### [1.4.3. Mood table generating processing]

Then, in step S30, the mood managing unit 130 makes an inquiry about a mood parameter corresponding to this feature value to the knowledge base system unit 150 using the extracted feature value as a key. The knowledge base system unit 150 extracts the mood parameter corresponding to the feature value for which the inquiry is made with reference to the knowledge database and returns the mood parameter to the mood managing unit 130. Further, the knowledge base system unit 150 extracts current user preference information with reference to the user database and returns the current user preference information to the mood managing unit 130 along with the mood parameter. The mood managing unit 130 generates a personalized mood table based on the mood parameter and the user preference information returned from the knowledge base system unit 150. This personalized mood table is generated for each time point of the timeline. Specifically, processing of generating the personalized mood table can be performed as follows.

### (Mood parameter extraction)

For example, when the feature value of content is provided as a keyword of "forest", the knowledge base system unit 150 extracts combinations of three items of knowledge data corresponding to the keyword as follows with reference to the core database. The extracted knowledge data is returned to the mood managing unit 130 as a mood parameter.
- "forest-broader-nature"
- "forest-color-green"
- "nature-aroma-wood family"
- "forest-wind-weak"
- "forest-sound-twitter"
- "forest-vibration-no"

### (User preference information acquisition)

The knowledge base system unit 150 acquires user preference information as illustrated in FIG. 6 with reference to the user database when extracting the mood parameter. As described above, the user preference information is associated with modes of the macro level and the micro level according to the property. The acquired user preference information is returned to the mood managing unit 130 along with the mood parameter. The knowledge base system unit 150 may specify the user based on, for example, login data to the mood creating system 10 or based on login data to the input apparatus 20 or the mood creating equipment 30 for reproducing content.

### (Mood table generation)

The mood managing unit 130 generates a personalized mood table in which the user preference is reflected based on the mood parameter and the user preference information. For example, among property of the user preference information, property of the macro level is classified with a large framework such as sex and age. Concerning such property, output of the mood parameter can be emphasized based on general knowledge, tendency and historical trend, and according to color or incense preferred by male or female, color or incense preferred by people in each age and content popular in each age.

Further, concerning property of the micro level, it is possible to change output or type of the mood parameter for each user from behavioral history or preference such as likes and dislikes. For example, if it is known from information of behavioral history that the user has recently been a certain location, when the content relates to the location, output of the mood parameter may be emphasized. Further, when output of the mood parameter is changed from preference information of likes and dislikes, the following operation may be performed.

For example, the mood managing unit 130 defines a parameter which brings benefits to the user as positive and defines a parameter which brings disadvantage to the user as negative among the mood parameters returned from the knowledge base system unit 150 while taking into account of user preference information. The mood managing unit 130 emphasizes output of the mood parameter for the positive mood parameter. For example, if the mood parameter relates to color, output intensity may be set higher than the initial setting value. Meanwhile, the mood managing unit 130 may weaken output intensity of the mood parameter or stop output for the negative mood parameter so that the user does not feel discomfort. When there are a plurality of candidates for the mood parameter, it is also possible to prevent the negative mood parameter from being selected.

Further, a method for changing the mood parameter in which the user preference is reflected includes a method for changing output intensity (gain) of the mood parameter and a method for changing a type of the mood parameter. The mood parameter includes a direct type parameter with which output content directly changes according to color, incense or preference. For example, in the method for changing the output intensity according to likes and dislikes of color, if the user favorite color is blue, output of blue may be set higher than the initial setting value. On the other hand, output of the color disliked by the user may be set equal to or lower than the initial setting value. As a result, the user sees the content while the favorite color is emphasized.

Further, the mood parameter includes a related type parameter with which output content does not directly change according to preference unlike with the direct type parameter. For example, concerning the parameter such as favorite talent and location, it is also possible to recognize relationship from tag information associated with the content or an analysis result and emphasize output of the mood parameter. Further, the case where favorite color, or the like, is assigned according to sex corresponds to the related type parameter, and output intensity of the mood parameter may be changed as in the case of talent, or the like. Further, concerning a parameter of nationality, output of the mood parameter may be emphasized when content relating to the home country appears. Still further, concerning a parameter of age, output of the mood parameter may be emphasized when content popular in the corresponding age appears.

In the method for changing a type of the mood parameter according to user preference information, a mood parameter close to user preference is selected. For example, when there is red or blue as a candidate for color to be output, if the user is male, blue may be selected, and if the user is female, red may be selected. Alternatively, color to be output may be forcibly replaced with the user favorite color.

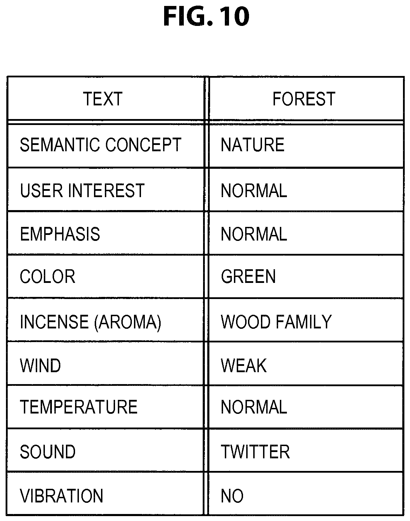

FIG. 10 illustrates a mood table generated by the mood managing unit 130 based on information of the mood parameter returned from the knowledge base system unit 150. While this mood table includes a degree of interest of the user with respect to the keyword indicating the feature value, in the example illustrated in FIG. 10, the user preference information is not reflected, and the degree of interest of the user is "normal". In a similar manner, the mood managing unit 130 sets "normal" for a slot which is not included in the information returned from the knowledge base system unit 150 among the slots of the mood table.

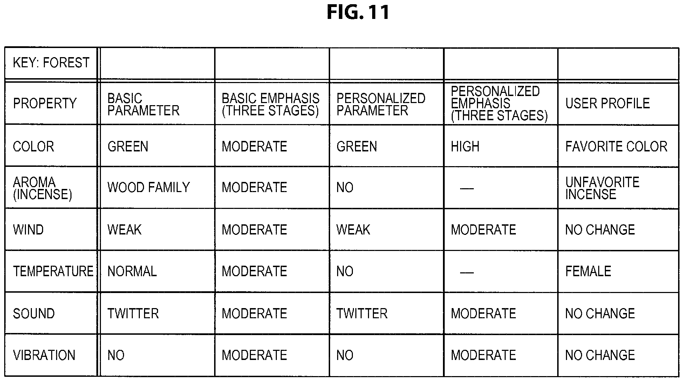

Meanwhile, FIG. 11 illustrates a personalized mood table generated by the mood managing unit 130 based on the information of the mood parameter and the user preference information. In this personalized mood table, original data of each mood parameter extracted from the knowledge database is defined as a basic parameter, and basic intensity of output of each mood parameter is defined as basic emphasis. Further, data in which user preference is reflected to the basic parameter is defined as a personalized parameter, and data in which user preference is reflected to the basic emphasis is defined as personalized emphasis. In this personalized mood table, each mood parameter is adjusted by reflecting user preference information so that the mood to be created becomes positive and does not become negative for the user.

### [1.4.4. Time-series graph generating processing]

Then, in step S40, the mood managing unit 130 generates a time-series graph indicating change of the mood over time by linking the personalized mood tables generated within the timeline in chronological order. At this time, the mood managing unit 130 may detect an excitement point for each timeline by detecting excitement of sound and further emphasize the mood parameter of the mood table.

### (Personalized time-series graph generation)

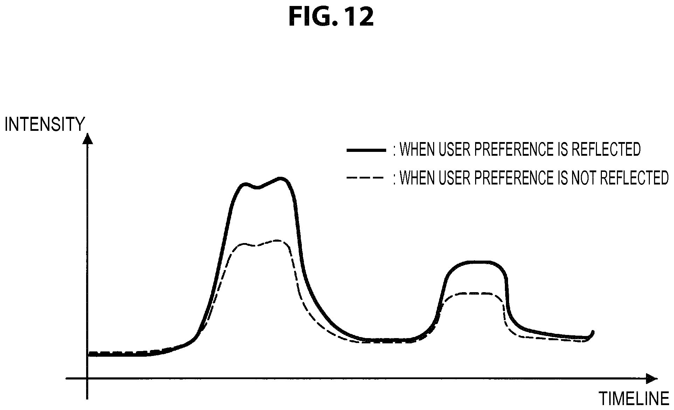

FIG. 12 illustrates an example of a time-series graph relating to color. Here, as specific color, an example of a time-series graph of green is illustrated. When the user preference information includes information indicating that the favorite color is green, in the personalized mood table, personalized emphasis of output of green is set higher than the basic emphasis. Therefore, in the time-series graph (solid line) in which the user preference is reflected, output intensity is set higher than that in a graph (dashed line) obtained by linking the mood tables based on original data extracted from the knowledge database in chronological order.

Besides the example of color, also in the case of favorite incense, favorite location, a favorite artist, or the like, it is possible to adjust output intensity of the mood parameter by reflecting the user preference. Information such as location and an artist included in the content may be specified through object recognition in an image, specification of a speaker of sound, analysis of a geo-tag (latitude/longitude information) of content, or the like. Alternatively, location, an artist, or the like, may be specified by reading a person tag, a location tag, or the like, already embedded for each timeline of the content.

### (Excitement applied time-series graph generation)

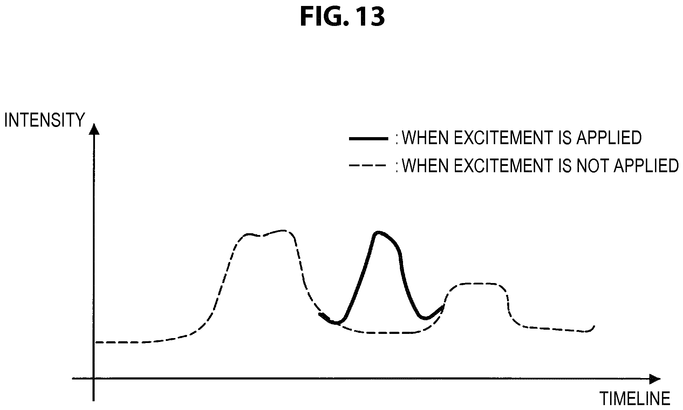

FIG. 13 illustrates an example of a time-series graph in which an excitement point within the content is detected and output intensity of the mood parameter is adjusted. In the time-series graph (solid line) in which excitement is reflected, output intensity at the excitement point is set higher than that in a graph (dashed line) obtained by linking the mood tables based on the original data extracted from the knowledge database in chronological order. By reflecting the excitement within the content, it is possible to set the output intensity higher according to the excitement also at a point where output intensity by the original data is low.

The excitement point within the content can be detected by, for example, creating excitement distribution within the content using a known technology for detecting excitement of sound by analyzing information of sound. Note that the excitement within the content may be reflected in the time-series graph obtained by linking the personalized mood tables in which the user preference is reflected instead of being reflected in a graph obtained by linking the mood tables based on the original data.

### [1.4.5. Device optimization processing]

Then, in step S50, the device managing unit 170 extracts a mood parameter which can be output with reference to the device profile based on the sensor information and the mood table. Further, in step S50, the device managing unit 170 selects mood creating equipment 30 corresponding to the mood parameter which can be output and transmits a control command to the output control unit 190. The output control unit 190 performs output control of the mood creating equipment 30 and changes the mood parameter according to the timeline of the content based on the time-series graph obtained by linking the personalized mood tables in chronological order. At this time, feedback may be provided so that a desired mood is created based on the sensor information of various provided sensor apparatuses.

### (Output timing correction)

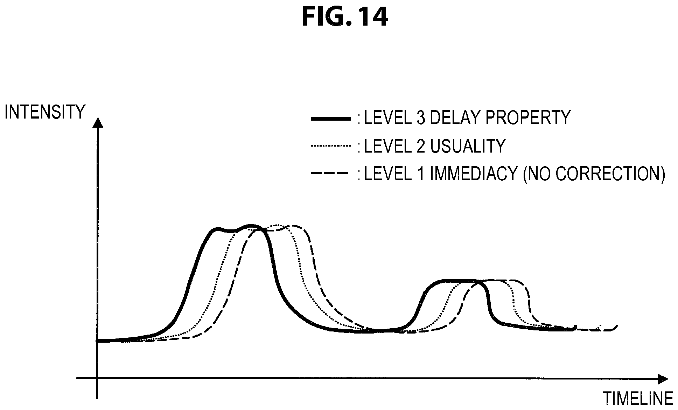

FIG. 14 is a time-series graph in which an output timing is corrected according to perception recognition characteristics of each mood parameter. The device managing unit 170 corrects the time-series graph with reference to the device profile as illustrated in FIG. 7 so that a timing of output change is expedited for a higher level of the perception recognition characteristics. In the example of FIG. 14, while the time-series graph of the mood parameter of "level 1. immediacy" is not corrected, the time-series graphs of the mood parameters of "level 2. usuality" and "level 3. delay property" are corrected so that the timing for output change is expedited.

Because the mood parameter corresponding to level 1 is a parameter whose output change is perceived by the user immediately, the mood parameter may be output without being corrected along the timeline obtained from the analysis result. On the other hand, because it takes time for the output change of the mood parameters corresponding to levels 2 and 3 to be perceived by the user, it is necessary to make the timing for output change earlier than the timeline obtained from the analysis result. Particularly, because, concerning the mood parameter of level 3, delay is highly likely to occur, it is necessary to output the mood parameter from the mood creating equipment 30 before content of the information of the content changes. By correcting the timing of the output change according to the perception recognition characteristics, it is possible to coordinate presentation of information of the content with the mood perceived by the user, so that the user can further experience realistic sensation.

Upon correcting the output change, it is also possible to correct the output change using an initial value set in advance at the system for each mood parameter. Alternatively, it is also possible to detect a distance between target mood creating equipment 30 and the user using the sensor apparatus and dynamically determine a correction value according to the distance. When the correction value is determined according to the distance, the correction value may be determined so that the timing of the output change becomes faster in proportion to the distance.

### <1.5. Usage example>

The configuration example of the mood creating system 10 and the mood control processing according to the present embodiment have been described above. A specific usage example of the mood creating system 10 will be described below.

### [1.5.1. Example upon viewing moving image]

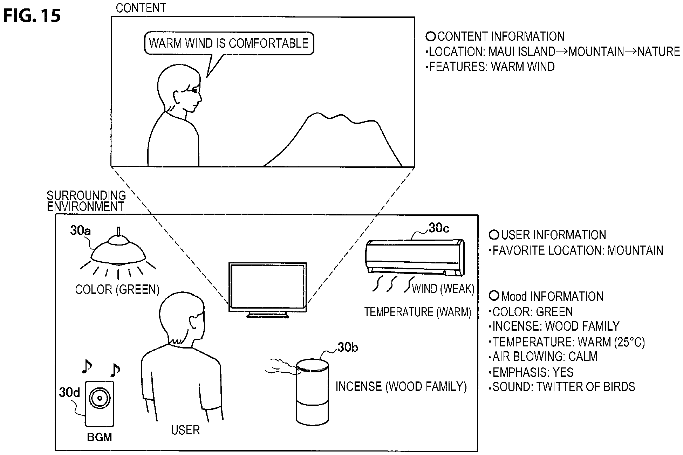

For example, as illustrated in FIG. 15, it is assumed that the user views moving image content shot in Maui island, Hawaii using display equipment such as a TV and a tablet. It is assumed that mountain is input as a favorite location in the user preference information. It is assumed that there is a scene in which a person says "the warm wind is comfortable" while seeing mountains in Maui island in this moving image. Keywords of "Maui island" and "warm wind" are extracted from the information of content of this scene. The information processing apparatus 60 reflects the user preference information extracted from the user database in the mood parameter extracted from these keywords using the knowledge database to generate the following personalized mood table.
- Color: green
- Incense: wood family
- Temperature: warm (25°C)
- Air blowing: calm
- Emphasis: yes
- Sound: twitter of birds

The information processing apparatus 60 generates a time-series graph by linking a plurality of mood tables including this personalized mood table in chronological order. By utilizing the mood creating system 10, in the above-described scene, lighting of the lighting equipment 30a changes to green, fresh wood incense is emitted from the aroma diffuser 30b, and warm wind blows from the air conditioner 30c. Further, twitter of birds is played back as a BGM from the speaker equipment 30d. At this time, output intensity of lighting, incense and air blowing is set higher by the user preference being reflected, and the user can experience realistic sensation as if he/she were in Hawaii.

### [1.5.2. Example upon listening to music]

For example, it is assumed that the user listens to a song of a favorite artist by utilizing a music player, or the like. In this case, by utilizing the mood creating system 10, it is possible to, for example, drastically change color of lighting according to a characteristic keyword, or the like, extracted from lyric included in music content. On the other hand, when the user listens to a song of an unfavorite artist, it is possible to, for example, make color of lighting change gently.

### [1.5.3. Example upon watching movie]

For example, it is assumed that the user watches a movie on a screen of a TV by reproducing movie content using a video reproduction apparatus. In this case, the information processing apparatus 60 can extract a keyword matching a person or a location from an image of the movie or can extract a characteristic keyword from lines or caption. Further, the information processing apparatus 60 can increase output intensity of the mood parameter by generating a time-series graph by reflecting the user preference information in the mood parameter selected from these keywords and specifying an excitement point of the movie from the sound. By utilizing the mood creating system 10, lighting, incense and air blowing are output while color of the lighting, incense emitted from the aroma diffuser and the temperature or an air blowing volume of the wind blowing from the air conditioner are changed according to the timeline of the movie. Further, a BGM according to the scene is played back from the speaker. Therefore, the user can watch the movie while further experiencing realistic sensation.

Note that, in order to generate the mood information in which the user preference is reflected, processing to be executed by the content analyzing unit 110, the mood managing unit 130 and the knowledge base system unit 150 may be executed in real time in accordance with reproduction of the content (processing mode 1). Alternatively, each processing may be executed in advance prior to a time point at which the content is reproduced (processing mode 2). Particularly, when the mood creating system 10 is used while a timing of output change of the mood creating equipment 30 is corrected by utilizing perception recognition characteristics, it is preferable to generate the personalized mood table and the time-series graph in advance.

For example, it is also possible to generate the above-described personalized mood table and the time-series graph in advance based on the information of the content and read out the time-series graph in accordance with reproduction of the content to perform output control of the mood creating equipment 30 (processing mode 2-1). Alternatively, it is also possible to generate a mood table and a time-series graph before the user preference is reflected for each content and generate mood information while reflecting the user preference when the content is reproduced (processing mode 2-2). In the processing modes 2-1 and 2-2, it is also possible to generate the mood information while correcting a timing of output change of the mood creating equipment 30 according to a distance between a position of the user and the mood creating equipment 30 when the content is reproduced, based on the mood table and the time-series graph generated in advance.

In this manner, the information processing apparatus 60 according to the present embodiment can employ various processing modes. While the information processing apparatus 60 described in the first embodiment employs a configuration where each of the processing units 110, 130, 150, 170 and 190 is provided within one information processing apparatus 60, each of the processing units may be configured using a plurality of information processing apparatuses. For example, in the above-described processing mode 2-1, the information processing apparatus may be configured by being divided into a first information processing apparatus including the content analyzing unit 110, the mood managing unit 130 and the knowledge base system unit 150, and a second information processing apparatus including the device managing unit 170 and the output control unit 190. In this case, it is also possible to employ a configuration where the first information processing apparatus generates mood information in which the user preference information is reflected in advance for each content, and the second information processing apparatus reads out the mood information and executes output control of the mood creating equipment 30.

Further, in the above-described processing mode 2-2, it is possible to configure a first information processing apparatus including the content analyzing unit 110 and a function of generating the mood table or the time-series graph with reference to the knowledge database among the mood managing unit 130 and the knowledge base system unit 150. In addition, it is possible to configure a second information processing apparatus including a function of generating the personalized mood table or the time-series graph in which the user preference information is reflected with reference to the user database among the mood managing unit 130 and the knowledge base system unit 150, the device managing unit 170 and the output control unit 190. In this case, it is possible to employ a configuration where the first information processing apparatus generates the mood information before the user preference information is reflected for each content in advance, and the second information processing apparatus reads out the mood information and executes output control of the mood creating equipment 30 after reflecting the user preference information.

As described above, according to the mood creating system 10 according to the present embodiment, the mood parameter is extracted based on the feature value extracted from content of the content with reference to the knowledge database. Further, according to the mood creating system 10, the user preference information is extracted along with the mood parameter with reference to the user database. The mood creating system 10 then generates the personalized mood table and the time-series graph in which the user preference information is reflected in the mood parameter and performs output control of the mood creating equipment 30. By this means, it is possible to create a mood in space according to the timeline of the content, so that the user can experience realistic sensation matching presentation of information of the content. At this time, because the user preference is reflected in the created mood, the user can experience realistic sensation without feeling discomfort. Further, because the created mood differs for each user, it is possible to reproduce a mood for each individual user.

### «2. Second embodiment»

The mood creating system according to the second embodiment of the present disclosure is configured as a system which enables combining processing when there a plurality of pieces of output information with respect to the same type of mood parameter. For example, when there are a plurality of pieces of content to be utilized at the same time, or when a plurality of users utilize the content, a plurality of personalized mood tables can be generated. In such a case, a plurality of pieces of output information are generated for the same type of mood parameter. In such a case, the mood creating system according to the present embodiment can create a mood by combining the plurality of pieces of output information.

The hardware configuration of the mood creating system according to the present embodiment can be made the same configuration as the mood creating system according to the first embodiment. In the mood creating system according to the present embodiment, at the mood managing unit 130 of the control unit 100 configuring the information processing apparatus 60, processing of combining a plurality of pieces of output information for the same type of mood parameter is performed.

For example, when a plurality of pieces of content are reproduced at the same time, the information processing apparatus 60 can create a plurality of moods by combining the plurality of pieces of content. In this case, the combining processing performed by the information processing apparatus 60 is not combination of the content, but combination of the moods, and the user needs to select content to be utilized from a plurality of pieces of existing content. For example, when there is only one content reproducing equipment, the user selects one piece of content to be utilized, while, when there are a plurality of content reproducing equipment, the user can utilize the respective pieces of content at the same time.

That is, it is possible to reproduce first content at first reproducing equipment while reproducing second content at second reproducing equipment. Therefore, in the mood creating system according to the present embodiment, a plurality of reproducing equipment is made to coordinate with each other, the first reproducing equipment is made to perform reproduction, and the second reproducing equipment is made to perform reproduction in synchronization with the first reproducing equipment, so that moods generated based on the respective pieces of content are combined and output.

For example, when it is set such that content relating to natural forest is reproduced in synchronization with reproduction of content of a certain concert, at the mood managing unit 130, a time-series graph is generated for each piece of content. The mood managing unit 130 combines time-series graphs of a plurality of pieces of content for each mood parameter. The combining processing can be performed using, for example, a simple merging method of combining a plurality of time-series graphs as is at normal speed.

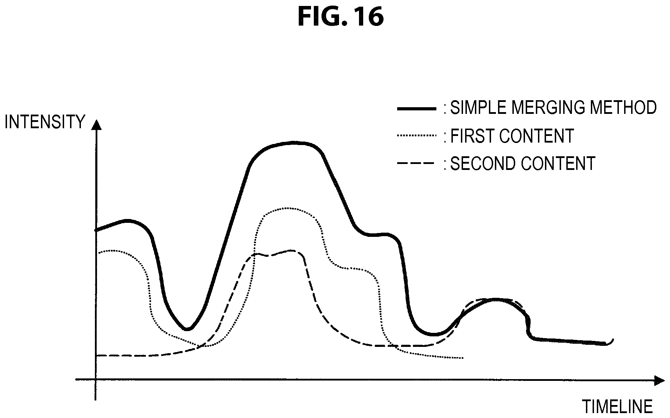

FIG. 16 illustrates an example of performing processing of combining time-series graphs using the simple merging method. According to this simple merging method, intensity of the mood parameter becomes a sum of output intensity of a plurality of mood parameters. By outputting the combined mood parameter, the user can experience realistic sensation as if he/she were at a concert venue in natural forest, which is unlikely in the real world. Combining using this simple merging method can be applied to a case where intensity of the mood parameters can be added up. Meanwhile, when intensity of the mood parameters cannot be added up such as a case where there is one piece of lighting equipment and there is only one type of reproduction of color, it is necessary to select any one of the plurality of mood parameters acquired based on the plurality of pieces of content.

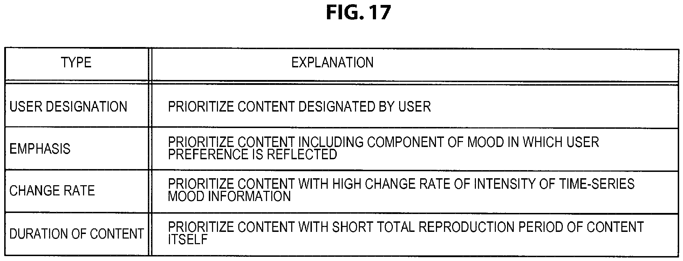

FIG. 17 illustrates a selection rule which defines which content should be prioritized when intensity of parameters cannot be added up. According to this selection rule, the user can select content to be prioritized, and, when the content is selected, the acquired mood parameter is selected based on the content. Meanwhile, when there is no selection of content to be prioritized, the mode automatically becomes an entrustment mode. In the entrustment mode, the mood parameter is selected by prioritizing content whose mood parameter is a parameter in which the user preference is reflected, prioritizing content whose mood parameter is a parameter in which a change rate of output intensity is high or prioritizing content whose reproduction period of the content itself is short.

The selection rule is not limited to those illustrated and can be set as appropriate. For example, it is also possible to determine a rate of reflection instead of determining one piece of content to be prioritized.

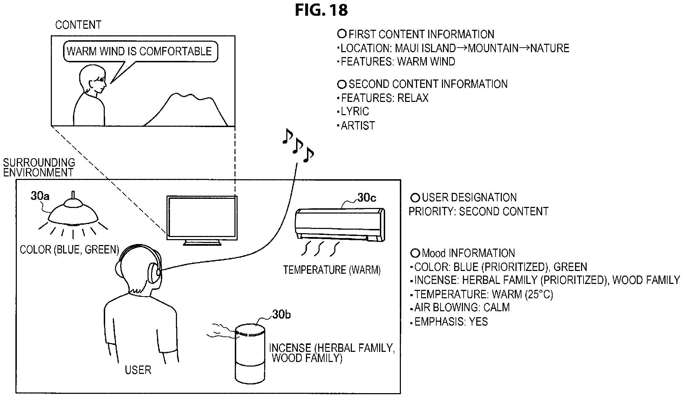

FIG. 18 illustrates a usage example of the mood creating system according to the present embodiment in the case where a plurality of pieces of content are reproduced at the same time. As illustrated in FIG. 18, it is assumed that the user reproduces moving image content using display equipment such as a TV and a tablet and reproduces music content using a music player. At this time, the music content is prioritized according to user designation by the selection rule illustrated in FIG. 17.

From the moving image content, keyword of "Maui island" and "warm wind" are extracted. Further, from the music content, a feature value of "relax" and texts of "lyric" and "artist" are extracted. The information processing apparatus 60 generates the following personalized mood table based on the mood parameter extracted from these keywords, or the like, using the knowledge database, the user preference information extracted from the user database and priority of the content. In the situation where the music content is reproduced, no other mood parameters of sound are set.
- Color: blue (prioritized), green
- Incense: herbal family (prioritized), wood family
- Temperature: warm (25°C)
- Air blowing: calm
- Emphasis: yes

While, in the above-described example, parameters of color and incense compete against each other, because these parameters are elements which cannot be added up, concerning color and incense, parameters corresponding to the music content which is prioritized content are selected. The information processing apparatus 60 generates a time-series graph by linking a plurality of mood tables including this personalized mood table in chronological order. By utilizing the mood creating system according to the present embodiment, when the moving image content and the music content are reproduced at the same time, lighting of the lighting equipment 30a changes to blue, herbal family incense is emitted from the aroma diffuser 30b, and warm wind blows from the air conditioner 30c. At the same time, output intensity of the lighting, incense and air blowing is set higher by reflecting the user preference, so that the user can experience a plurality of moods at the same time.

Further, when a plurality of users utilize the content at the same time, the information processing apparatus 60 performs combining processing on a plurality of time-series graphs generated by reflecting the preference information for each user. The combining processing can be performed in a similar manner to a case where a plurality of pieces of content are reproduced at the same time. That is, when intensity of mood parameters can be added up, for example, time-series graphs are combined using the simple merging method. Meanwhile, when intensity of mood parameters cannot be added up, it is determined whether or not which user preference information should be prioritized according to a selection rule set in advance.

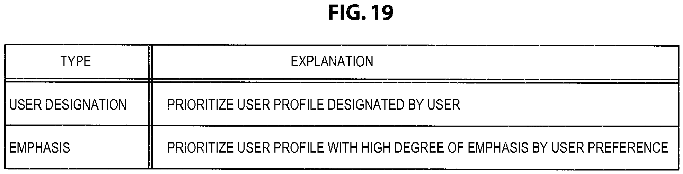

FIG. 19 illustrates the selection rule which defines which user preference information should be prioritized when intensity of parameters cannot be added up. According to this selection rule, a plurality of users can select a user to be prioritized, and, when there is selection of a user, a mood parameter in which the user preference information is reflected is selected. Meanwhile, when there is no selection of a user to be prioritized, the mode automatically becomes an entrustment mode. In the entrustment mode, for example, a user whose degree of emphasis of output is higher can be prioritized. The selection rule is not limited to those illustrated, and can be set as appropriate.

As described above, the mood creating system according to the present embodiment can basically provide the same effects as those of the mood creating system according to the first embodiment. Further, when a plurality of pieces of content are reproduced at the same time, or when a plurality of users utilize the content, the mood creating system according to the present embodiment creates a mood by combining the mood parameters. At this time, concerning the mood parameter in which output intensity can be added up, the mood parameter is output by adding up output intensity of the plurality of mood parameters. Therefore, the user can experience a mood which is unlikely in the real world. Further, concerning the mood parameter in which output intensity cannot be added up, a mood parameter to be prioritized is selected according to the selection rule set in advance. Therefore, a desired mood is created according to any of the plurality of pieces of content.

Note that, also in the mood creating system according to the present embodiment, the information processing apparatus can be configured with a plurality of information processing apparatuses according to processing modes for generating the mood information.

### <<3. Third embodiment>>

### <3.1. Outline of mood creating system>

First, outline of the mood creating system according to the third embodiment of the present disclosure will be described. The mood creating system according to the present embodiment is a system of creating a mood in space using mood creating equipment in coordination with presentation of information of content, and is configured so that action of the user is reflected when the mood is created. For example, there can be a case where the user desires to change lighting more flashy when the user views a live image of the user's favorite artist. Further, there can be a case where, for example, the user desires to turn off emission of incense during a meal when a mood is created in coordination with presentation of information of the content. Therefore, the mood creating system according to the present embodiment is configured to allow the user to adjust a mood to be created in coordination with presentation of information of the content.

### <3.2. Configuration example of mood creating system>

The hardware configuration of the mood creating system according to the present embodiment can be basically made the same as that of the mood creating system according to the first embodiment. However, in the mood creating system according to the present embodiment, the input apparatus 20 includes operation equipment which allows setting operation of the system, an imaging apparatus, a sound collecting microphone, or the like, as apparatuses for detecting action of the user.

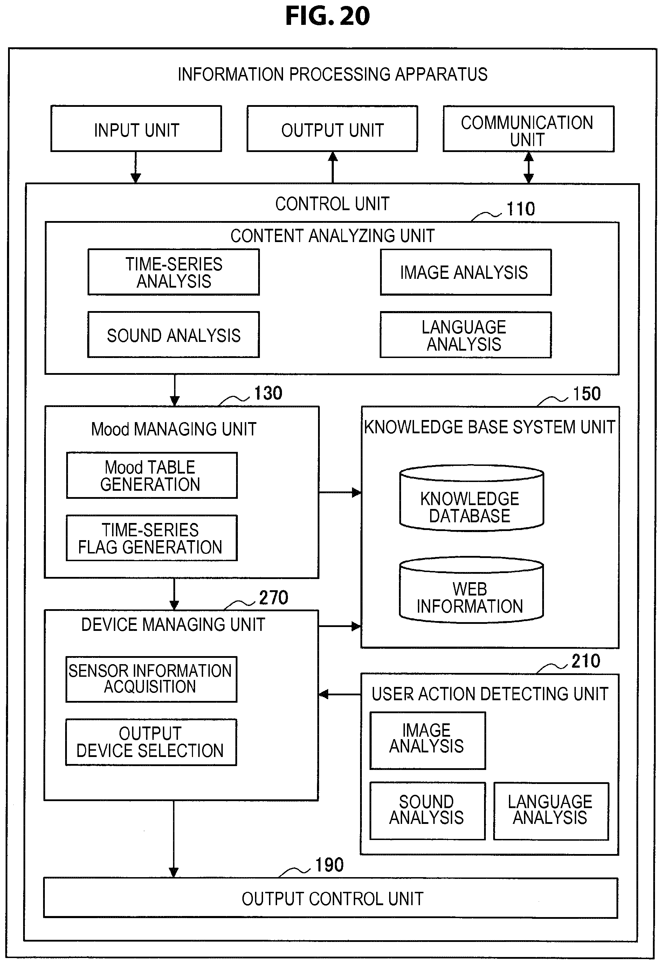

FIG. 20 is a block diagram functionally illustrating a software configuration of the control unit 200 of the information processing apparatus 60. The control unit 200 includes, a user action detecting unit 210, a content analyzing unit 110, a mood managing unit 130, a knowledge base system unit 150, a device managing unit 270 and an output control unit 190. These units can be specifically made functional units which are implemented by a CPU executing a program. Among these, units other than the user action detecting unit 210 and the device managing unit 270 have the same configurations as those of the units of the information processing apparatus 60 according to the first embodiment.

Further, control processing of generating a time-series graph of a mood to be created in coordination with presentation of information of content can be basically made the same as that of the mood creating system according to the first embodiment. However, in the present embodiment, the user preference information does not have to be necessarily reflected in the mood to be created. The mood to be created in coordination with presentation of information of content, mainly, control processing of adjusting a mood by reflecting user action will be described below based on FIG. 1 and FIG. 20.

### <3.3. Mood adjusting processing>

Examples of user operation for adjusting the mood can include a method in which operation is performed by the input apparatus 20 being directly touched, sound operation using utterance of the user, user gesture operation, or the like. Concerning adjustment of the mood, there are a scene in which a type of mood is selected and a scene in which an output value is changed, and operation which can be accepted by the information processing apparatus 60 may be changed in the respective scenes.

### (3.3.1. Mood adjustment using direct operation)

First, mood adjusting processing in which the user performs operation by directly touching the input apparatus 20 will be described. The input apparatus 20 described here is, for example, an apparatus which allows setting operation of the mood creating system 10, and can include, for example, operation equipment with a screen such as a smartphone and a tablet. The user action detecting unit 210 accepts user operation input information to the input apparatus 20 and transmits the input information to the device managing unit 270. The device managing unit 270 adjusts output intensity of a desired mood parameter or stops output from part of the mood creating equipment 30 according to the user operation input.

### (3.3.2. Mood adjustment using sound operation)

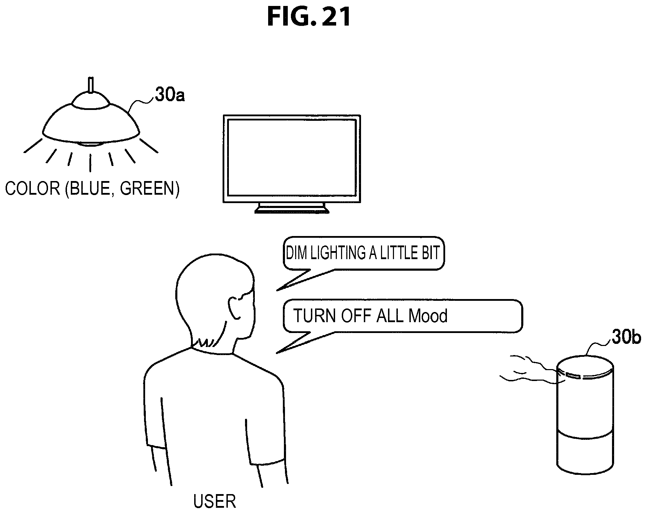

Mood adjusting processing using sound operation by utterance of the user will be described next. This method is effective, for example, when the user is cooking or during a meal and cannot perform operation using the above-described input apparatus 20. FIG. 21 is an explanatory diagram illustrating the mood adjusting processing using sound operation. It is assumed that, in a situation where the lighting equipment 30a and the aroma diffuser 30b perform output in coordination with presentation of information of the content, the user says "dim the lighting a little bit". The user action detecting unit 210 accepts the utterance of the user through the sound collection microphone and performs processing of extracting a keyword, or the like, indicating intention of the user through known sound analysis, language analysis, or the like.

In this example, the user action detecting unit 210 understands a "degree" from a term "a little bit", specifies the "lighting equipment 30a" from the word "dim" and recognizes user intention of "dim the lighting". That is, the user action detecting unit 210 can specify the lighting equipment 30a through language analysis and adjust output even when the expression is not direct expression such as "weaken output of the lighting", but the ambiguous expression which does not designate the mood creating equipment 30. The device managing unit 270 weakens the output of the lighting equipment 30a according to user intention detected by the user action detecting unit 210. By this means, it is possible to dim the lighting according to user sound operation while a mood is created in coordination with presentation of information of the content.

Alternatively, it is assumed that, in a situation illustrated in FIG. 21, the user says "turn off all the moods". In this case, the user action detecting unit 210 recognizes user intention that the user desires to stop output of all the mood creating equipment 30 through sound analysis and language analysis. The device managing unit 270 stops output of the lighting equipment 30a and the aroma diffuser 30b according to the user intention detected by the user action detecting unit 210. By this means, it is possible to cancel creation of a mood once from a state where the mood is created in coordination with presentation of information of the content according to the user sound operation.

### (3.3.3. Mood adjustment using gesture operation)

Mood adjusting processing using user gesture will be described next. There can be various kinds of action as an operation method using gesture. Here, an example of adjusting a mood using motion of the finger and the line of sight will be described. The user gesture, for example, motion of the finger and the line of sight can be detected by, for example, analyzing imaging information acquired through an imaging apparatus.

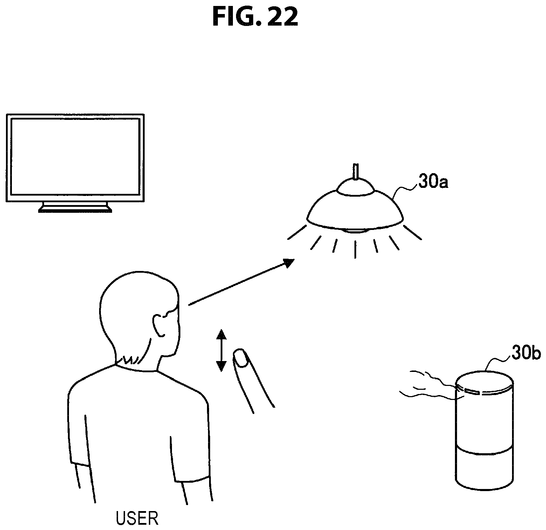

FIG. 22 is an explanatory diagram illustrating an example of adjusting a mood by detecting motion of the finger and the line of sight of the user. It is assumed that, in a situation where the lighting equipment 30a and the aroma diffuser 30b perform output in coordination with presentation of information of content, the user moves his/her index finger up or down while seeing the lighting equipment 30a. The user action detecting unit 210 specifies the lighting equipment 30a on the line of sight through the imaging information and recognizes user intention of strengthening or weakening output from the motion of the index finger. The device managing unit 270 adjusts output of the lighting equipment 30a according to the user intention detected by the user action detecting unit 210. By this means, it is possible to adjust brightness of the lighting according to the user gesture operation while a mood is created in coordination with presentation of information of the content.

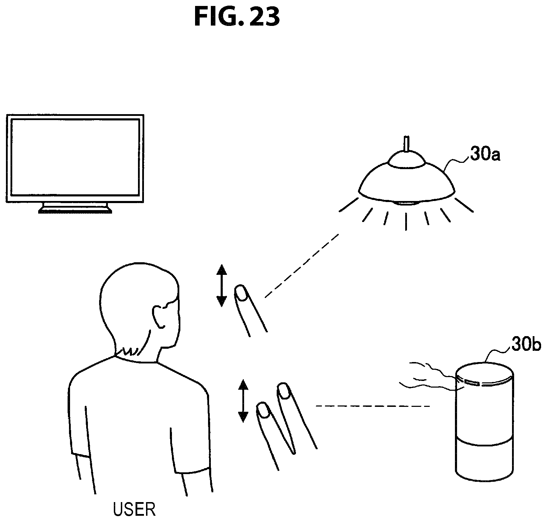

FIG. 23 is an explanatory diagram illustrating an example of adjusting a mood by detecting the number and motion of the fingers of the user. In this example, information associated with the mood creating equipment 30 corresponding to the number of fingers is stored in the information processing apparatus 60. Here, one finger indicates the lighting equipment 30a, and two fingers indicate the aroma diffuser 30b. It is assumed that, in a situation where the lighting equipment 30a and the aroma diffuser 30b perform output in coordination with presentation of information of the content, the user moves his/her index finger up or down. The user action detecting unit 210 detects the number and motion of the user fingers through the imaging information, specifies the lighting equipment 30a because the number of fingers is one, and recognizes user intention of strengthening or weakening output from the motion of the index finger. The device managing unit 270 adjusts output of the lighting equipment 30a according to the user intention detected by the user action detecting unit 210.

Alternatively, it is assumed that, in a situation illustrated in FIG. 23, the user moves his/her two fingers of the index finger and the middle finger up or down. In this case, the user action detecting unit 210 specifies the aroma diffuser 30b because the number of fingers is two, and recognizes user intension of strengthening or weakening output from the motion of the two fingers. The device managing unit 270 adjusts output of the aroma diffuser 30b according to the user intention detected by the user action detecting unit 210. In this manner, it is possible to adjust a mood according to user gesture operation while the mood is created in coordination with presentation of information of the content.

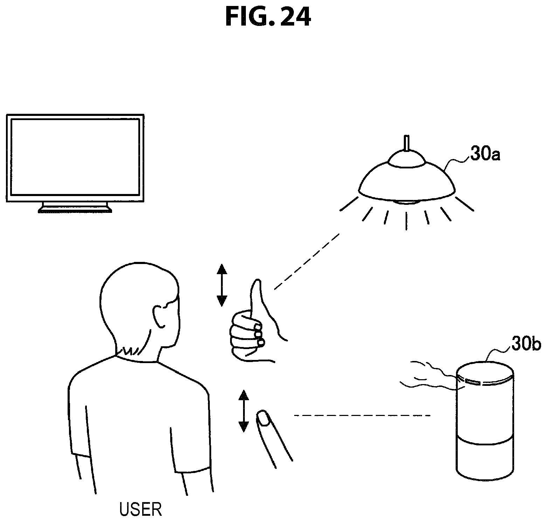

FIG. 24 is an explanatory diagram illustrating an example of adjusting a mood by detecting the type and motion of the finger of the user. In this example, information associated with the mood creating equipment 30 corresponding to the type of finger is stored in the information processing apparatus 60. Here, the thumb indicates the lighting equipment 30a, and the index finger indicates the aroma diffuser 30b. It is assumed that, in a situation where the lighting equipment 30a and the aroma diffuser 30b perform output in coordination with presentation of information of content, the user moves his/her thumb up or down. The user action detecting unit 210 detects the type and motion of the user finger through the imaging information, specifies the lighting equipment 30a because the finger is the thumb, and recognizes user intention of strengthening or weakening output from the motion of the thumb. The device managing unit 270 adjusts output of the lighting equipment 30a according to the user intention detected by the user action detecting unit 210.

Alternatively, it is assumed that, in a situation illustrated in FIG. 24, the user moves his/her index finger up or down. In this case, the user action detecting unit 210 specifies the aroma diffuser 30b because the finger is the index finger, and recognizes user intention of strengthening or weakening output from the motion of the index finger. The device managing unit 270 adjusts output of the aroma diffuser 30b according to the user intention detected by the user action detecting unit 210. In this manner, it is possible to adjust a mood according to user gesture operation while the mood is created in coordination with presentation of information of the content.

### (3.3.4. Mood adjusting processing according to other action)

The information processing apparatus 60 may automatically adjust a mood according to user action other than the above-described examples. For example, when the user makes a call, the information processing apparatus 60 may turn off or weaken output intensity of sound or vibration output in coordination with presentation of information of the content. Specifically, when the user is using specific equipment such as a telephone, the information processing apparatus 60 stops content reproducing equipment which is not being utilized or stops output of the mood creating equipment 30 which should be stopped, speculated from the user operation situation. Alternatively, by making the telephone coordinate with the mood creating system and the information processing apparatus 60 recognizing a usage state of each equipment, the information processing apparatus 60 performs adjusting processing as appropriate according to the usage state of the equipment. The information processing apparatus 60 can detect that the user makes a call by analyzing the imaging information.

Further, when the user stands up while a mood is created in coordination with presentation of information of the content, the information processing apparatus 60 may brighten the lighting when the brightness of the lighting is low. Because there is a possibility that the user starts walking when the user stands up, by brightening the room, it is possible to reduce a risk. The information processing apparatus 60 can detect that the user stands up by analyzing the imaging information.

Further, the information processing apparatus 60 may control output and stop of the mood creating equipment 30 along with suspension and reproduction of content according to whether the user is in an environment where the user utilizes the content. For example, when the user leaves the room, that is, when the user moves outside a detection range of the imaging apparatus and the sensor apparatus, or when the user moves away from content reproducing equipment with a distance set in advance or more, the information processing apparatus 60 suspends output of the content or the mood. Further, when the user returns within the detection range of the imaging apparatus and the sensor apparatus, or when the user returns within a range of a distance from the content reproducing equipment, set in advance, the information processing apparatus 60 automatically reproduces content which is being suspended. In this manner, it is possible to automatically stop or reproduce output of the mood without inhibiting user action.

Further, the information processing apparatus 60 may change a change rate of the output of the mood according to speed of the user action. For example, when the user moves small and slowly like a conductor, the change rate can be made small, while, when the user moves vigorously and quickly, the change rate can be made large. By performing control in this manner, it is possible to freely change the change rate of the mood according to action of the user him/herself.

Further, the information processing apparatus 60 may update user preference information on the user database by learning user evaluation with respect to the created mood based on user utterance or gesture according to a rule defined in advance. By performing control in this manner, it is possible to appropriately reproduce a mood matching the user preference.

As described above, according to the mood creating system according to the present embodiment, output of the mood is adjusted while the user action is reflected when the mood is created in coordination with presentation of information of the content. By this means, it is possible to automatically adjust output of the mood while reflecting the user intention or according to the user action, so that it is possible to create a comfortable mood according to the user action.

Note that, while, in the present embodiment, the device managing unit 270 adjusts the mood by reflecting the user action or intention, the mood managing unit 130 may adjust the mood by correcting the mood parameter, or the output control unit 190 may adjust the output intensity. Further, also in the mood creating system according to the present embodiment, the information processing apparatus can be configured with a plurality of information processing apparatuses according to processing modes of generating the mood information.

### «4. Fourth embodiment»

The mood creating system according to the fourth embodiment of the present disclosure is configured as a system in which the information processing apparatus further has a function of recognizing a surrounding environment of the user and emphasizing output of the mood toward a specific point in the mood creating system according to the first to the third embodiments. The point in which output of the mood is emphasized can be made an object or a location. For example, while examples of the point can include a glass, a mirror, a table, a display, or the like, the point can be made various kinds of objects or locations other than these.

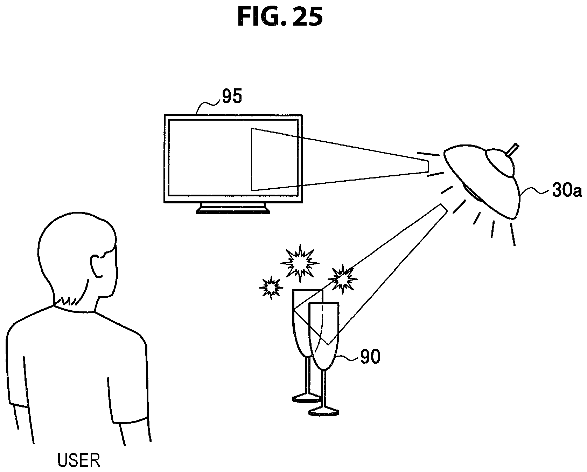

FIG. 25 is an explanatory diagram illustrating an example where lighting illuminated from the lighting equipment 30a is made to illuminate a predetermined object with pinpoint accuracy as an example of the mood control processing by the mood creating system according to the present embodiment. In this example, a function of illuminating a glass 90 and a display apparatus 95 located around the user particularly intensely is illustrated. The object or the location to be illuminated may be specified by, for example, recognizing the object in space using the imaging information acquired using a camera and determining the specific object or location. Alternatively, the object or the location to be illuminated may be specified by attaching an RFID tag to the object or the location for which the user desires to positively emphasize the mood and detecting the position.

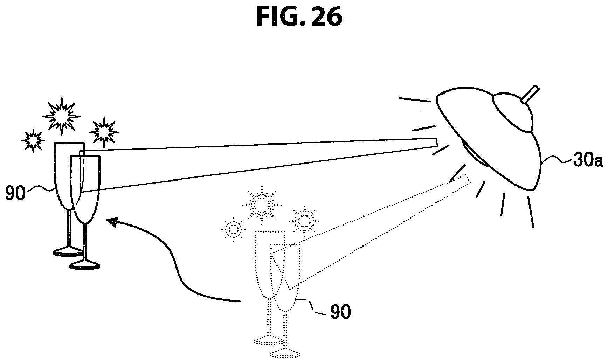

FIG. 26 illustrates an example where a target to be illuminated is specified by attaching an RFID tag to the glass 90. In this manner, by using the RFID tag, even when the position of the glass 90 moves, the illumination position can follow the position, and the glass 90 can be always illuminated. For example, it is possible to use this embodiment in a case of, at a counter of a bar, illuminating the glass 90 with lighting in accordance with the mood of the BGM played back at the bar by following the glass 90 used by a customer.

### «Fifth embodiment»

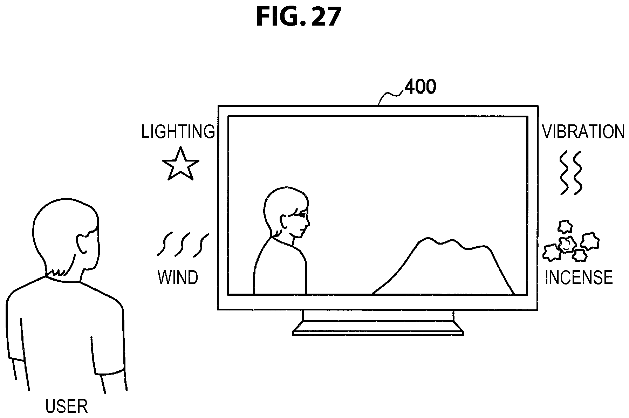

The fifth embodiment of the present disclosure is multi mood output adaptive equipment in which content reproducing equipment itself is configured as the mood creating system. FIG. 27 illustrates an example of image display equipment 400 configured as the multi mood output adaptive equipment. This image display equipment 400 includes an input apparatus which is not illustrated, a lighting apparatus, an air blower, a vibration generating apparatus and an incense diffusing apparatus as the mood creating equipment 30, and is configured to be able to execute the mood control processing by the information processing apparatus provided along with them. According to the multi mood output adaptive equipment according to the present embodiment, it is possible to easily carry the apparatus in user desired space as so-called all-in-one content reproducing equipment.

Note that, also in the present embodiment, the multi mood output adaptive equipment does not have to include all the processing units of the information processing apparatus. For example, it is also possible to employ a configuration where the information processing apparatus reads out the mood information generated in advance by reflecting the user preference and can execute output control of the mood creating equipment 30. Alternatively, it is also possible to employ a configuration where the information processing apparatus reads out the mood information generated in advance without reflecting the user preference and can perform output control of the mood creating equipment 30 after reflecting the user preference.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, while, in the above-described embodiment, the mood creating system can provide stimulation to a visual sense, an auditory sense, an olfactory sense and a tactile sense, the present technology is not limited to this example, and the mood creating system only has to be a system which can provide stimulation to at least any one of the senses. Further, configurations of the above-described first to fifth embodiments may be combined as appropriate.

Further, the effects described in this specification are merely illustrative or exemplified effects, and are not limitative. That is, with or in the place of the above effects, the technology according to the present disclosure may achieve other effects that are clear to those skilled in the art based on the description of this specification.

Additionally, the present technology may also be configured as below.
(1) An information processing apparatus including:
   a control unit configured to control mood creating equipment so as to create, in coordination with presentation of information of content to be utilized by a user, a mood which is different from the presentation of the information and which is a mood from stimulation perceivable by the user, the mood being a mood in which preference or action of the user is reflected.
(2) The information processing apparatus according to (1),
   wherein the control unit is configured to create the mood based on a feature value extracted from the content.
(3) The information processing apparatus according to (1) or (2),
   wherein the control unit is configured to change output intensity of the mood creating equipment according to the preference or the action of the user.
(4) The information processing apparatus according to any one of (1) to (3),
   wherein the control unit is configured to select a type of the mood creating equipment to be used according to the preference or the action of the user.
(5) The information processing apparatus according to any one of (1) to (4),
   wherein the control unit is configured to reflect the preference of the user in the mood with reference to a database in which preference information of the user is stored.
(6) The information processing apparatus according to (5),
   wherein the preference information of the user is associated with a level of preference intensity, and
   the control unit is configured to make a degree of reflection of the preference of the user in the mood different according to the preference intensity.
(7) The information processing apparatus according to (5),
   wherein the preference information of the user is associated with a level of preference intensity, and
   when there are a plurality of users utilizing the content, the control unit is configured to reflect the preference of the user in the mood while prioritizing preference information of a user having higher preference intensity.
(8) The information processing apparatus according to any one of (1) to (7),
   wherein, when a plurality of pieces of content are utilized at the same time, the control unit is configured to create the mood while prioritizing content designated by the user.
(9) The information processing apparatus according to any one of (1) to (7),
   wherein, when a plurality of pieces of content are utilized at the same time, the control unit is configured to create the mood obtained by synthesizing output of the corresponding moods.
(10) The information processing apparatus according to (9),
   wherein, when a plurality of pieces of content are utilized at the same time, the control unit is configured to create the mood selected according to priority of the content for the mood for which output is not able to be synthesized.
(11) The information processing apparatus according to any one of (1) to (10),
   wherein, when there are a plurality of users utilizing the content, the control unit is configured to create the mood in which preference of a selected specific user is preferentially reflected.
(12) The information processing apparatus according to any one of (1) to (11),
   wherein the control unit is configured to create the mood in which the preference or the action of the user is reflected in a mood parameter according to a feature value extracted from the content.
(13) The information processing apparatus according to (12),
   wherein the control unit is configured to create the mood based on a time-series graph obtained by linking the mood parameters at a plurality of time points of the content in chronological order.
(14) The information processing apparatus according to any one of (2) to (13),
   wherein the control unit is configured to determine content for which the mood in coordination with presentation of information of the content is to be created based on a change rate of output of the mood creating equipment.
(15) The information processing apparatus according to any one of (1) to (14),
   wherein the control unit is configured to control an output timing of the mood creating equipment according to perception recognition characteristics of each mood.
(16) The information processing apparatus according to any one of (1) to (15),
   wherein the control unit is configured to control an output timing of the mood creating equipment according to a distance between the user and the mood creating equipment.
(17) The information processing apparatus according to any one of (1) to (16),
   wherein the control unit is configured to adjust the mood based on input operation, sound input operation or gesture operation by the user.
(18) The information processing apparatus according to any one of (1) to (17),
   wherein the control unit is configured to change the mood according to intention of the user obtained by analyzing action of the user utilizing the content.
(19) The information processing apparatus according to any one of (1) to (18),
   wherein the mood creating equipment is at least one of lighting equipment, an aroma diffuser, a speaker, an electric fan, an air conditioner and a vibration generating apparatus.
(20) An information processing method including:
   controlling mood creating equipment using a control apparatus so as to create, in coordination with presentation of information of content to be utilized by a user, a mood which is different from the presentation of the information and which is a mood from stimulation perceivable by the user, the mood being a mood in which preference or action of the user is reflected.
(21) A program causing a computer to execute:
   a function of controlling mood creating equipment so as to create, in coordination with presentation of information of content to be utilized by a user, a mood which is different from the presentation of the information and which is a mood from stimulation perceivable by the user, the mood being a mood in which preference or action of the user is reflected.
(22) A mood creating system including:
   mood creating equipment configured to create a mood from stimulation perceivable by a user in a surrounding environment of the user; and
   an information processing apparatus configured to control mood creating equipment so as to create, in coordination with presentation of information of content to be utilized by the user, a mood which is different from the presentation of the information, the mood being a mood in which preference or action of the user is reflected.

### Reference Signs List

- 10: mood creating system
- 20: input apparatus
- 30: output apparatus (mood creating equipment)
- 30a: lighting equipment
- 30b: aroma diffuser
- 30c: air conditioner
- 40: storage apparatus
- 50: communication apparatus
- 60: information processing apparatus
- 90: glass
- 95: display apparatus
- 100: control unit
- 110: content analyzing unit
- 130: mood managing unit
- 150: knowledge base system unit
- 170: device managing unit
- 190: output control unit
- 200: control unit
- 210: user action detecting unit
- 270: device managing unit
- 400: image display equipment (multi mood output adaptive equipment)

## Claims

1. An information processing apparatus comprising:
a control unit configured to control mood creating equipment so as to create, in coordination with presentation of information of content to be utilized by a user, a mood which is different from the presentation of the information and which is a mood from stimulation perceivable by the user, the mood being a mood in which preference or action of the user is reflected.

2. The information processing apparatus according to claim 1,
wherein the control unit is configured to create the mood based on a feature value extracted from the content.

3. The information processing apparatus according to claim 1,
wherein the control unit is configured to change output intensity of the mood creating equipment according to the preference or the action of the user.

4. The information processing apparatus according to claim 1,
wherein the control unit is configured to select a type of the mood creating equipment to be used according to the preference or the action of the user.

5. The information processing apparatus according to claim 1,
wherein the control unit is configured to reflect the preference of the user in the mood with reference to a database in which preference information of the user is stored.

6. The information processing apparatus according to claim 5,
wherein the preference information of the user is associated with a level of preference intensity, and
the control unit is configured to make a degree of reflection of the preference of the user in the mood different according to the preference intensity.

7. The information processing apparatus according to claim 5,
wherein the preference information of the user is associated with a level of preference intensity, and
when there are a plurality of users utilizing the content, the control unit is configured to reflect the preference of the user in the mood while prioritizing preference information of a user having higher preference intensity.

8. The information processing apparatus according to claim 1,
wherein, when a plurality of pieces of content are utilized at the same time, the control unit is configured to create the mood while prioritizing content designated by the user.

9. The information processing apparatus according to claim 1,
wherein, when a plurality of pieces of content are utilized at the same time, the control unit is configured to create the mood obtained by synthesizing output of the corresponding moods.

10. The information processing apparatus according to claim 9,
wherein, when a plurality of pieces of content are utilized at the same time, the control unit is configured to create the mood selected according to priority of the content for the mood for which output is not able to be synthesized.

11. The information processing apparatus according to claim 1,
wherein, when there are a plurality of users utilizing the content, the control unit is configured to create the mood in which preference of a selected specific user is preferentially reflected.

12. The information processing apparatus according to claim 1,
wherein the control unit is configured to create the mood in which the preference or the action of the user is reflected in a mood parameter according to a feature value extracted from the content.

13. The information processing apparatus according to claim 2,
wherein the control unit is configured to determine content for which the mood in coordination with presentation of information of the content is to be created based on a change rate of output of the mood creating equipment.

14. The information processing apparatus according to claim 1,
wherein the control unit is configured to control an output timing of the mood creating equipment according to perception recognition characteristics of each mood.

15. The information processing apparatus according to claim 1,
wherein the control unit is configured to control an output timing of the mood creating equipment according to a distance between the user and the mood creating equipment.

16. The information processing apparatus according to claim 1,
wherein the control unit is configured to adjust the mood based on input operation, sound input operation or gesture operation by the user.

17. The information processing apparatus according to claim 1,
wherein the control unit is configured to change the mood according to intention of the user obtained by analyzing action of the user utilizing the content.

18. The information processing apparatus according to claim 1,
wherein the mood creating equipment is at least one of lighting equipment, an aroma diffuser, a speaker, an electric fan, an air conditioner and a vibration generating apparatus.

19. An information processing method comprising:
controlling mood creating equipment using a control apparatus so as to create, in coordination with presentation of information of content to be utilized by a user, a mood which is different from the presentation of the information and which is a mood from stimulation perceivable by the user, the mood being a mood in which preference or action of the user is reflected.

20. A program causing a computer to execute:
a function of controlling mood creating equipment so as to create, in coordination with presentation of information of content to be utilized by a user, a mood which is different from the presentation of the information and which is a mood from stimulation perceivable by the user, the mood being a mood in which preference or action of the user is reflected.
